# EUROPÄISCHE PATENTSCHRIFT

(11) **EP 2 226 479 B1**
(45) Veröffentlichungstag und Bekanntmachung des Hinweises auf die Patenterteilung: **01.02.2012**
(21) Anmeldenummer: 09003287.1
(22) Anmeldetag: 06.03.2009
(51) Int. Cl.: F01N 3/20

(54) **Sequentielle Heizvorrichtung für Flüssigkeitstanks**
Sequential heating device for liquid tanks
Dispositif de chauffage séquentiel pour réservoir de liquide

(43) Veröffentlichungstag der Anmeldung: 08.09.2010
(73) Patentinhaber: DBK David + Baader GmbH, 76870 Kandel/Pfalz (DE)
(72) Erfinder: Wildegger, Christian, 67714 Waldfischbach - Burgalben (DE)
(74) Vertreter: Polte, Willi

(56) Entgegenhaltungen:
- EP-A2- 2 080 874
- DE-A1-102006 046 900
- DE-A1-102007 047 862
- DE-A1-102008 008 324
- FR-A- 2 916 476

## Beschreibung

Die Erfindung betrifft ein Verfahren zum Aufschmelzen eines in einem Flüssigkeitstank eines Kraftfahrzeugs angeordneten Volumens eines gefrorenen Fluids, bei dem durch das Kraftfahrzeug eine vorgegebene maximal abgreifbare Versorgungsleistung zur Verfügung gestellt wird, welche zumindest teilweise durch eine Heizvorrichtung mit mehreren am oder im Flüssigkeitstank angeordneten Heizelementen in Wärme gewandelt und diese dem Volumen zugeführt wird. Femer betrifft die Erfindung eine elektrische Heizvorrichtung für einen Flüssigkeitstank für Kraftfahrzeuge, die mit einer durch das Kraftfahrzeug maximal bereitgestellten Versorgungsteistung betreibbar ist, mit mehreren am oder im Flüssigkeitstank angeordneten Heizelementen, die mit der Versorgungsleistung betreibbar sind, sowie mit einer Steuereinheit zum Betrieb zur Heizelemente.

Bei Flüssigkeitstanks von Kraftfahrzeugen tritt das Problem auf, dass die Flüssigkeiten gefrieren, wenn die Umgebungstemperaturen unter den spezifischen Gefrierpunkt der jeweiligen Flüssigkeit fallen. So erstarrt insbesondere im Winter die Reinigungsflüssigkeit der Scheibenwaschanlage im Vorratsbehälter, so dass die Heck- und Windschutzscheiben unmittelbar nach dem Kaltstart des Kraftfahrzeugs nicht gereinigt werden können. Um ein Einfrieren der Reinigungsflüssigkeit zumindest hinauszuzögern, wird dieser ein Frostschutzmittel zugesetzt, welches den Gefrierpunkt der Reinigungsflüssigkeit auf bis zu etwa -20 °C senkt.

Frostschutzmittel können jedoch nicht allen Flüssigkeiten des Kraftfahrzeugs zugesetzt werden. Beispielsweise wird eine wässrige Harnstofflösung verwendet, um die Stickoxid-Emissionen in den Abgasen von Verbrennungsmotoren zu senken. In dem sogenannten SCR-Verfahren (selective catalytic reduction: selektive katalytische Reduktion) werden die Stickoxide in einem Katalysator in unbedenkliche Substanzen umgesetzt. Als Reduktionsmittel wird dampf- bzw. gasförmiges Ammoniak verwendet, das aus der wässrigen Harnstofflösung erzeugt wird. Die wässrige Harnstofflösung mit beispielsweise einem Harnstoffgehalt von 32,5 Gew.-% gefriert bei einer Temperatur von unter -11 °C. Ein handelsübliches Frostschutzmittel würde das SCR-Verfahren stören.

Um dennoch ein Einfrieren der Harnstofflösung zu verhindern oder diese nach einem Kaltstart möglichst schnell zu verflüssigen sind im Stand der Technik Heizsysteme zur Erwärmung der Lösung oder anderer im Kraftfahrzeug verwendeter Flüssigkeiten vorgeschlagen, die elektrisch betrieben werden. Femer können die bei tiefen Temperaturen gefrierenden Flüssigkeiten auch mit anderen Wärmequellen des Fahrzeugs, beispielsweise mit einem Kühlflüssigkeitskreislauf, thermisch verbunden sein.

Mit den bisherigen Systemen und den von diesen durchgeführten Verfahren dauert das Aufschmelzen des Gesamtvolumens an gefrorener Flüssigkeit jedoch zu lange. Aufgeschmolzene Flüssigkeit steht womöglich erst nach einer langen Zeit nach einem Kaltstart des Fahrzeugs zur Verfügung.

Zur Verringerung der benötigten Zeit zum Aufschmelzen zumindest einer für eine Startphase des Kraftfahrzeugs benötigten Menge an abgeschmolzener Flüssigkeit schlagen die Druckschriften EP 1 767 417 A1 und DE 10 2006 027 487 A1 vor, ein Teil- oder auch Kaltstartvolumen vom Gesamtvolumen abzutrennen und dieses gesondert aufzuschmelzen. Die benötigte Wärmemenge zum Aufschmelzen des kleineren Volumens ist geringer als beim Gesamtvolumen, wodurch sich dieses schneller aufschmelzen lässt. Jedoch ist die Abtrennung des Kaltstartvolumens aufwändig. Einerseits muss das Kaltstartvolumen auch bei niedrigen Pegelständen des Flüssigkeitstanks ausreichend Flüssigkeit zum Betrieb des Kraftfahrzeugs nach einem Kartstart umfassen. Andererseits muss die Flüssigkeit des Kaltstartvolumens auch dann aus dem Flüssigkeitstank entnehmbar sein, wenn dieser vollständig mit gefrorener Flüssigkeit gefüllt ist. Daher sind die Kaltstartvolumina des Standes der Technik vorzugsweise in einem unteren Bereich des Flüssigkeitstanks angeordnet und mit einem Belüftungsventil versehen oder werden über eine separate Vorrichtung im Betrieb ständig befüllt. Der konstruktive Aufwand zur Erzeugung des Kaltstartvolumens ist also erheblich.

Weitere Verfahren und Heizvorrichtungen der eingangs genannten Art sind in den Druckschriften DE 10 2007 047 862 A1, EP-A 2 080 874 und FR-A-2 916 476 beschrieben

Daher ist es die Aufgabe der vorliegenden Erfindung, eine Heizvorrichtung und ein Verfahren zum Aufschmelzen des Gesamtvolumens an gefrorener Flüssigkeit eines Kraftfahrzeugtanks bereitzustellen, welche nach einem möglichst kurzen Zeitraum abgeschmolzene Flüssigkeit generiert und die konstruktiv einfach ist.

Die Aufgabe wird für das eingangs genannte Verfahren dadurch gelöst, dass zum Aufschmelzen des Gesamtvolumens die Heizelemente einzeln oder in Gruppen nacheinander betrieben werden. Für die eingangs genannte Heizvorrichtung wird die Aufgabe dadurch gelöst, dass die Steuereinheit mehrere unabhängig schaltbare Anschlüsse aufweist, die mit den Heizelementen elektrisch leitend verbunden sind.

Durch diese einfache Maßnahme ist es möglich, innerhalb eines vorgegebenen begrenzten Zeitraums nach einem Kaltstart des Kraftfahrzeugs mit einer begrenzten Versorgungsleistung ein Volumen an gefrorener Flüssigkeit abzutauen, welches durch die bekannten Heizsysteme in der gleichen Zeit und mit der gleichen Versorgungsleistung nicht aufgeschmolzen werden kann.

Die gesamte zur Verfügung stehende und durch das betriebene Heizelement in Wärme umsetzbare Heizleistung wird erfindungsgemäß in ein begrenztes, dem betriebenen Heizelement zugeordnetes Aufschmelzvolumen eingebracht. Hierdurch wird vermieden, dass die zur Verfügung stehende Versorgungsleistung über die große Gesamtheizfläche aller Heizelemente verteilt in das Gesamtvolumen der gefrorenen Flüssigkeit eingebracht wird und die gute Wärmeleitfähigkeit der gefrorenen Flüssigkeit dazu führt, dass die Wärme sich gleichmäßig verteilt und zu einer Erwärmung des Eises führt, ohne dass dieses nennenswert aufgeschmolzen wird.

Vielmehr wird die gesamte in Wärme wandelbare Heizleistung in einem beschränkten Bereich konzentriert, wodurch anfangs nur ein Teil des Aufschmelzvolumens hoch effektiv verflüssigt wird. Die im Bereich des betriebenen Heizelementes abgeschmolzene Flüssigkeit vermag die Wärme weniger gut zu leiten als die gefrorene Flüssigkeit und wird durch das betriebene Heizelement weiter aufgewärmt. Die warme Flüssigkeit erwärmt lokal primär das sie umgebende Eis. Dabei kann die durch die betriebenen Heizelemente erzeugte Wärme wenigstens teilweise dem noch gefrorenen oder bereits zumindest abschnittsweise aufgeschmolzenen Fluid zugeführt werden. Insbesondere flache Tanks oder solche mit flachen Abschnitten können optimal beheizt werden.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile wird im Folgenden eingegangen.

So erhöht sich das Volumen an abgetauter Flüssigkeit im Betrieb sukzessive, wodurch sich auch die Oberfläche des beheizten Eises nach und nach vergrößert. Die im Vergleich zum Stand der Technik anfangs hohe Effektivität des Abschmelzvorgangs nimmt im Laufe der Zeit ab, wenn sich der Übergang von bereits aufgetauter zu noch gefrorener Flüssigkeit weiter vom Heizelement entfernt. Gemäß einer ersten Ausgestaltung kann das betriebene Heizelement daher gewechselt werden, wenn ein vorgegebenes Zeitintervall abgelaufen und/oder das dem betriebenen Heizelement zugeordnete Aufschmelzvolumen des Gesamtvolumens aufgeschmolzen ist. Hierzu umfasst die Steuereinheit ein Schaltelement mit mehreren weiteren Schaltstellungen, wobei in jeder der Schaltstellungen jeweils wenigstens ein anderer der Anschlüsse geschaltet und die Heizleistung an zumindest ein anderes Heizelement leitbar ist. In jeder der Schaltstellungen kann jeweils nur eines der Heizelemente oder eine vorgegebene Gruppe von Heizelementen betrieben werden. Eine Gruppe kann wenigstens zwei Heizelemente umfassen, die nebeneinander angeordnet oder durch wenigstens ein weiteres, nicht zusammen mit der Gruppe in der aktuellen Schaltstellungen betriebenes Heizelement, getrennt sind. Die maximale Anzahl der zu den jeweiligen Gruppen gehörenden Heizelementen kann geringer als die Gesamtanzahl der Heizelemente der Heizeinrichtung sein. Werden die Heizelemente gruppenweise betrieben, so kann zumindest ein nicht zur betreibenden Gruppe gehörendes Heizelement der Heizvorrichtung nicht gleichzeitig mit den restlichen Heizelementen betrieben werden.

Das Schaltelement kann als wenigstens als ein mechanischer, elektromechanischer oder elektronischer Schalter mit mindestens zwei Schaltstellungen ausgebildet sein. Insbesondere kann die Anzahl der möglichen Schaltstellungen zumindest der Anzahl der Heizelementanschlüsse der Steuereinheit entsprechen.

Mit den jeweiligen Heizelementen können unterschiedliche Aufschmelzvolumina des Gesamtvolumens aufgeschmolzen werden. Nach dem Wechsel des Heizelementes oder der Gruppe steigt die Effektivität des Aufschmelzvorgangs wieder auf das ursprüngliche und dem Stand der Technik überlegene Niveau.

Die Heizvorrichtung kann wenigstens einen Temperatursensor zur Bestimmung des Aggregatzustands der Flüssigkeit wenigstens eines der Aufschmelzvolumina umfassen. Dieser Temperatursensor kann in einem oberen Bereich des Aufschmelzvolumens angeordnet 25 sein, wobei je ein Temperatursensor pro Aufschmelzvolumen vorgesehen sein kann. Die Steuereinrichtung kann mindestens einen Signaleingang aufweisen, dem das Signal des Temperatursensors wenigstens eines der Aufschmelzvolumina zuführbar ist.

Die Heizelemente können ebenfalls mit einem Temperatursensor zur Überwachung der abgegebenen Wärme ausgerüstet sein. So kann auch vermieden werden, dass das Fluid lokal überhitzt wird.

Die unterschiedlichen Aufschmelzvolumina können aneinander angrenzen oder einander zumindest abschnittsweise überlappen und in Summe dem Gesamtvolumen entsprechen. Umfassen die den mehreren Heizelementen zugeordneten unterschiedlichen Aufschmelzvolumina das Gesamtvolumen an gefrorener Flüssigkeit, so wird das Gesamtvolumen zumindest im Mittel mit der vorgegebenen Heizleistung effektiver und somit schneller abgetaut als mit den bekannten Verfahren. Hierbei kann insbesondere der Wechsel des betriebenen Heizelementes nach dem vollständigen Abschmelzen des diesem Heizelement zugeordneten Aufschmelzvolumens vorteilhaft sein, da bei diesem Wechsel unterschiedliche Temperaturen des gefrorenen Fluids automatisch berücksichtigt werden.

Die Heizelemente können in einer vorgegebenen Reihenfolge betrieben werden, so dass nacheinander benachbarte oder voneinander durch ein weiteres Aufschmelzvolumen getrennte Aufschmelzvolumina abgeschmolzen werden können. Werden nacheinander benachbarte Aufschmelzvolumina abgeschmolzen, so entsteht schnell ein möglichst großes zusammenhängendes Volumen an abgeschmolzener Flüssigkeit. Werden nacheinander durch ein weiteres Aufschmelzvolumen getrennte Aufschmelzvolumina abgeschmolzen, so wird das zwischen den nacheinander abgeschmolzenen Aufschmelzvolumina angeordnete Aufschmelzvolumen durch das Beheizen der beiden abgrenzenden Volumina mit beheizt und somit erwärmt oder womöglich sogar wenigstens teilweise mit abgeschmolzen.

Insbesondere kann das Gesamtvolumen segmetnweise aufgeschmolzen werden, wobei einzelne Segmente oder Aufschmelzvolumina nacheinander und ausgehend von einer Entnahmeöffnung oder Entnahmeleitung des Flüssigkeitstanks abgeschmolzen werden. Um schnell ein möglichst großes zusammenhängendes Volumen an aufgetauter Flüssigkeit zu erhalten, können die Aufschmelzvolumina aneinander angrenzende und beispielsweise sternförmig oder konzentrisch um die Entnahmeöffnung oder Entnahmeleitung angeordnete Segmente sein.

Sollte die zur Verfügung stehende Versorgungsleistung die maximal mögliche Leistungsaufnahme des betriebenen Heizelementes oder der betriebenen Gruppe von Heizelementen übersteigen, so kann die Differenzieistung zumindest einem der anderen und insbesondere dem Heizelement, das nach dem Aktuellen betrieben werden soll, zugeleitet werden. Das Gesamtvolumen wird hierdurch noch schneller abgeschmolzen.

Die Heizelemente können mit einer Heizleistung betrieben werden, die kleiner oder gleich der für das betriebene Heizelement spezifizierten maximalen elektrischen Leistungsaufnahme ist und die aus der Versorgungsleistung entnommen wird. Die Steuereinheit kann eine Leistungsregulierungsvorrichtung aufweisen, der eingangsseitig die Versorgungsleistung zugeführt sein kann und die ausgangsseitig die Heizleistung an das Schaltelement leiten kann. Oftmals kann es zum Abschmelzen des Gesamtvolumens jedoch vorteilhaft sein, wenn das betriebene Heizelement mit einer seiner maximalen Leistungsaufnahme oder der Versorgungsleistung entsprechenden Heizleistung versorgt wird.

Hierdurch ist es möglich, die maximal mögliche Wärmemenge in die Flüssigkeit einzubringen, ohne das betriebene Heizelement zu überlasten. Ferner können die Heizelemente auch mit einer geringeren Heizleistung betrieben werden, falls diese ausreicht, um die Flüssigkeit abzutauen, wenn die Heizvorrichtung ein Einfrieren der Flüssigkeit verhindern oder wenn eine lokale Überhitzung der Flüssigkeit vermieden werden soll. Die Differenzleistung zwischen der Versorgungsleistung und der aktuell dem betriebenen Heizelement zugeführte Heizleistung kann wenigstens einem weiteren Heizelement zugeleitet werden.

Die dem betriebenen Heizelement zugeführte Heizleistung kann in Abhängigkeit von der Höhe des Gesamtvolumens, einem vorbestimmten Zeitintervall und/oder der Temperatur des Fluids des Kühlkreislaufs, mit dem Wärme in den Flüssigkeitstank einleitbar ist, verändert werden. Ist der Flüssigkeitspegel im Tank gering, kann eine geringe Heizleistung zum Aufschmelzen der Flüssigkeit ausreichen. Femer wird so vermieden, dass bei niedrigen Pegelständen womöglich nicht von Flüssigkeit bedeckte Heizelemente betrieben werden. Hierzu kann die Heizvorrichtung eine Pegelmessvorrichtung zur Bestimmung des Füllstands des Flüssigkeitstanks umfassen.

Insbesondere bei geringen Füllständen oder wenn die Temperatur der gefrorenen Flüssigkeit nur knapp unterhalb der Schmelztemperatur der Flüssigkeit liegt, kann es vorteilhaft sein, wenn Gruppen von Heizelementen nacheinander betrieben werden. Hierdurch ist das Volumen an gefrorener Flüssigkeit insgesamt schneller aufzutauen als beim sequenziellen Betrieb einzelner Heizelemente.

Wird die gefrorene Flüssigkeit auch über den Kühlkreislauf mit Aufschmelzwärme versorgt und ist das im Kühlkreislauf strömende Fluid warm genug, um die gefrorene Flüssigkeit im Tank abzutauen, wird weniger elektrische Energie, die nur im begrenzten Maße durch das Kraftfahrzeug bereitgestellt werden kann, für die Heizvorrichtung benötigt. Hierzu kann die Heizvorrichtung wenigstens einen Temperatursensor zur Ermittlung der Temperatur des Fluids des Kühlkreislaufs aufweisen.

Eines der Heizelemente kann eine Entnahmeleitung des Flüssigkeitstanks erwärmen und zu Beginn des Verfahrens mit der maximalen Heizleistung betrieben werden. Hierdurch wird gewährleistet, dass in der Entnahmeleitung vorhandene gefrorene Flüssigkeit abgetaut wird und die Entnahme von im Tank womöglich bereits oder noch vorhandener nicht gefrorener Flüssigkeit nicht behindert wird. Die Entnahmeleitung ist jederzeit und insbesondere kurz nach Inbetriebnahme der Heizvorrichtung frei von Eis. Beispielsweise kann das die Entnahmeleitung heizende Heizelement im Wesentlichen hohlzylindrisch ausgeformt und wenigstens abschnittsweise um die Entnahmeleitung geführt sein.

Wenigstens die verbleibenden Heizelemente können als Flächenheizer ausgebildet sein, wodurch sich ein für die Abgabe von Wärme vorteilhaftes Verhältnis von Oberfläche zu Volumen der Heizelemente ergibt. Die Flächenheizer können im Wesentlichen plattenförmig ausgebildet sein und einen im Wesentlichen zentral auf einer Wärmeverteilungsplatte angeordneten Leistungswandler aufweisen. Mit dem Leistungswandler kann elektrische Leistung in Wärme gewandelt werden. Aufgrund der selbstbeschränkenden Eigenschaften sind PTC-Widerstände besonders vorteilhaft als Leistungswandler, da diese die maximal erzeugte Temperatur selbstständig nach oben beschränken. Auch können die Flächenheizer geätzte Heizbahnen, Heizfolien, Stanzgitter aus Heizmaterial, womöglich plattenförmig gewickelte Rohrheizkörper, Flach- oder Rundheizdrähte sowie Carbonfasermatten umfassen.

Um neben der Wärmestrahlung auch die Konvektion der abgeschmolzenen Flüssigkeit zum Aufschmelzen des Gesamtvolumens möglichst optimal zu nutzen, können die Heizelemente im Bereich des Tankbodens angeordnet sein. Insbesondere die als Flächenheizer ausgebildeten Heizelemente können vorzugweise im Wesentlichen horizontal und/oder parallel zum Tankboden ausgerichtet sein. Auch ist es vorteilhaft, wenn sie gleichmäßig über den Tankboden verteilt und sich nicht überlappend angeordnet sind.

Die Heizelemente können aneinander angrenzen. Alternativ können die Heizelemente voneinander beabstandet angeordnet sein, da die Aufschmelzvolumina aufgrund der Wärmestrahlung der Heizelemente und der thermischen Konvektion der abgeschmolzenen Flüssigkeit die Aufschmelzvolumina konvex ausgebildet sind und sich auch zum Gesamtvolumen vereinen können, wenn der Abstand zwischen den Heizelementen für ein zumindest abschnittsweises Überlappen der Aufschmelzvolumina nicht zu groß ist.

Die Heizelemente können an einer unteren Wandung des Flüssigkeitstanks befestigt und beispielsweise mit der Wandung verklebt oder auch über Halteelemente verklemmt sein. Insbesondere können die Heizelemente nebeneinander den Tankboden im Wesentlichen auskleidend angeordnet sein, so dass die sich ins Tankinnere erstreckenden Aufschmelz volumina aller Heizelemente in Summe dem Gesamtvolumen an gefrorener Flüssigkeit auch bei vollem Tank entsprechen.

Auch können die Heizelemente in einer Wandung des Tanks oder außen am Tank angebracht sein. Zur Einbringung der Heizelemente in die Wandung können diese beispielsweise bei der Herstellung eines Kunststofftanks mit dem Tankmaterial umspritzt werden. Um zu verhindern, dass die durch die Heizelemente abgegebene Wärme an die Umgebung des Tanks abgegeben wird, kann dieser von außen thermisch isoliert sein. Um die von den Heizelementen abgegebene Wärme allseitig an die Flüssigkeit des Tanks abzugeben, können die Heizelemente auch beabstandet vom Tankboden im Tank angeordnet sein.

Ferner können die Heizelemente wie bei der unteren Wandung an oder in den seitlichen oder oberen Tankwandungen bzw. im Bereich einer der jeweiligen Wandungen vorgesehen sein.

Im Folgenden wird die Erfindung beispielhaft anhand von Ausführungsformen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde.

Es zeigen:
- Fig. 1: eine schematische Darstellung eines ersten Ausführungsbeispiels der Erfindung;
- Fig. 2: eine schematische Darstellung eines weiteren Ausführungsbeispiels der Erfin- dung, bei dem die Heizvorrichtung in einem Tank angeordnet gezeigt ist;
- Fig. 3: eine schematische Darstellung eines dritten Ausführungsbeispiels der Erfindung.

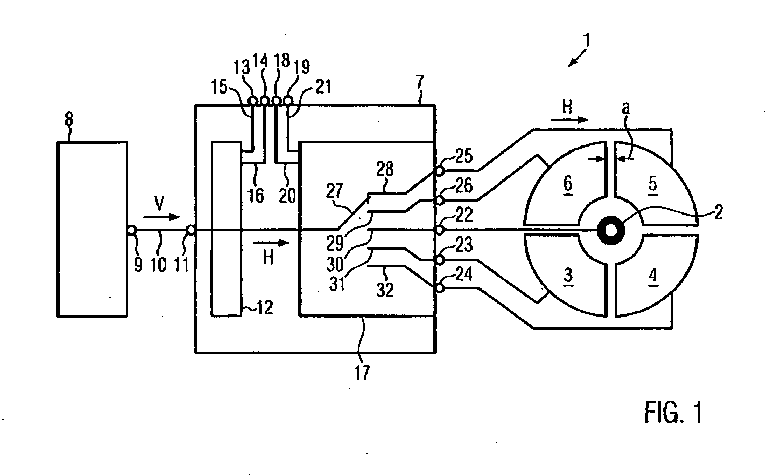

Zunächst sind Aufbau und Funktion einer erfindungsgemäßen elektrischen Heizvorrichtung für einen Flüssigkeitstank für Kraftfahrzeuge mit Bezug auf das Ausführungsbeispiel der Fig. 1 beschrieben. Die elektrische Heizvorrichtung 1 ist hier ohne einen Flüssigkeitstank gezeigt. Sie umfasst fünf Heizelemente 2 - 6 sowie eine Steuereinheit 7. Femer zeigt die Fig. 1 eine Versorgungsleistungsquelle 8, die beispielsweise als Lichtmaschine oder als eine andere elektrische Energiequelle eines Kraftfahrzeugs ausgebildet sein kann.

Die Versorgungsleistungsquelle 8 weist einen Versorgungsausgang 9 auf, an welchem eine Versorgungsleistung V abgreifbar ist. Die Versorgungsleistung V entspricht der maximalen Leistung, welche für die elektrische Heizvorrichtung 1 vom Kraftfahrzeug zur Verfügung gestellt werden kann. Über eine Versorgungsleitung 10 ist die Versorgungsleistung V zu einem Eingang 11 der Steuereinheit 7 leitbar.

Innerhalb der Steuereinheit 7 wird die Versorgungsleistung V zunächst an eine Leistungsreguliervorrichtung 12 geleitet. Des Weiteren ist die Leistungsreguliervorrichtung 12 mit zwei Signaleingängen 13, 14 über die Signalleitungen 15, 16 signalübertragend verbunden. Anhand der an den Signaleingängen 13, 14 anliegenden Signalen kann die Versorgungsleistung V vollständig oder verringert als eine Heizleistung H an ein der Leistungsreguliervorrichtung 12 nachgeschaltetes Schaltelement 17 weitergeleitet werden. Die Heizleistung H ist jederzeit kleiner oder gleich der maximal möglichen spezifischen Leistungsaufnahme des betriebenen Heizelements 2 - 6. Gerade kurz nach Inbetriebnahme des Kraftfahrzeugs kann die zur Verfügung stehende Versorgungsleistung V geringer oder gleich der für das betriebene Heizelement 2 - 6 benötigten Heizleistung H sein. Insbesondere diesem Fall kann die Versorgungsleistung V vollständig an das Heizelement 2 - 6 geleitet werden.

Auch das Schaltelement 17 ist mit zwei Signaleingängen 18, 19 über zwei Signalleitungen 20, 21 verbunden. Die Steuereinheit 7 kann mehr oder auch weniger als vier Signaleingänge 13, 14, 18, 19 aufweisen, die mit der Leistungsreguliervonichtung 12 oder dem Schaltelement 17 verbunden sein können und denen Sensorsignale von Temperatur- oder Pegelmesssensoren oder auch Signale eines Zeitintervallgebers zugeführt werden können.

Das Schaltelement 17 weist fünf Ausgänge 22 - 26 auf, wobei die Heizleistung H in einer vorbestimmten Schaltstellung des Schaltelementes 17 wahlweise über mindestens einen der Ausgänge 22 - 26 ausgebbar ist. Die Anzahl der Ausgänge 22 - 26 stimmt mit der Anzahl der Heizelemente 2 - 6 überein. Folglich kann die Steuereinheit 7 auch mehr oder weniger als fünf Ausgänge 22 - 26 aufweisen, wenn die Heizvorrichtung 1 mit mehr oder auch weniger als fünf Heizelementen 2 - 6 verbindbar sein soll. Auf schaltungstechnisch notwenige Rückleitungen, welche den aus der Heizvorrichtung 1 und der Heizleistungsquelle 8 gebildeten Heizstromkreis schließen, ist der Übersichtlichkeit halber verzichtet.

Das Schaltelement 17 weist beispielsweise einen mechanischen Schaltkontakt 27 auf, der mit einem mit dem Ausgang 25 verbundenen Gegenkontakt 28 kontaktiert ist. Das Schaltelement 17 weist noch vier weitere Gegenkontakte 29 - 32 auf, die mit den Ausgängen 22 - 24 und 26 elektrisch leitfähig verbunden sind und die jeweils mit dem Schaltkontakt 27 kontaktierbar sind. Alternativ kann der Schaltkontakt 27 auch als ein elektromechanischer oder elektrischer Schalter ausgebildet sein.

Jeweils einer der Ausgänge 22 - 26 ist mit einem der Heizelemente 2 - 6 die Heizleistung H leitend verbunden. Die Heizelemente 3 - 6 sind als vier Ringsegmente eines Kreisrings ausgebildet. Im Zentrum des Kreisrings ist das hohlzylindrisch ausgebildete und aus der Zeichenebene heraus ragende Heizelement 2 angeordnet. Die als Ringsegmente ausgestalteten Heizelemente 3 - 6 sind voneinander im tangentiell zum Ring verlaufenden Abstand a beabstandet angeordnet. In einer weiteren möglichen Ausgestaltung kann auch eine Gruppe von Heizelementen 3 - 6, welche beispielsweise die Heizelemente 3 und 4 umfassen kann, gleichzeitig betrieben werden.

Im Betrieb stellt die Versorgungsleistungsquelle 8 eine maximale Menge an Versorgungsleistung V zur Verfügung, welche für die Steuereinheit 7 und die Leistungsreguliervorrichtung 12 am Versorgungsausgang 9 im Betrieb zur Verfügung gestellt wird. Aus der von der Leistungsreguliervorrichtung 12 abgegriffenen Menge an Versorgungsleistung V wird die Heizleistung H entnommen und an das Schaltelemente 17 weitergeleitet. Dabei kann die Leistungsreguliervorrichtung 12 die Versorgungsleistung V entweder vollständig oder nur teilweise als Heizleistung H weiterleiten. Beispielsweise kann die maximal weitergeleitete Heizleistung H der maximal durch das in der aktuellen Schaltstellung versorgte Heizelement 2 - 6 in Wärme aufnehmbaren elektrischen Leistung entsprechen.

Ferner kann die Leistungsreguliervorrichtung 12 die Menge der aus der Versorgungsleistung V entnommenen Heizleistung H anhand der über die Signalleitungen 15,16 zugeleiteten Signale variieren. Beispielsweise kann die Leistungsmenge an ausgegebener Heizleistung H vom Füllstand des Flüssigkeitstanks und somit von der Höhe des aufzuschmelzenden Gesamtvolumens an gefrorener Flüssigkeit abhängen. Auch kann die Leistungsmenge von der Temperatur der gefrorenen Flüssigkeit abhängen. Ist die Eistemperatur höher als ein Sollwert oder liegt die Höhe des Gesamtvolumens unterhalb einer vorgegebenen Größe, so kann die aus der Versorgungsleistung V entnommene Heizleistung H durch die Leistungsreguliervorrichtung 12 verringert werden. Schließlich kann die dem betriebenen Heizelement 2 - 6 zugeführte Heizleistung H abhängig von dessen Temperatur verändert werden. Hierzu kann an jedem der Heizelemente 2 - 6 ein mit der Steuereinheit 7 verbundenen Temperatursensor vorgesehen sein.

Des Weiteren kann die Temperatur eines in einem Kühlkreislauf zirkulierenden Fluids gemessen werden, wenn mit diesem Wärme in den Flüssigkeitstank und somit in das aufzuschmelzende Fluid einleitbar ist. Auch kann ein die Temperatur des betriebenen Heizelementes 2 - 6 repräsentierendes Signal von der Steuereinheit 7 und insbesondere von der Leistungsreguliervorrichtung 12 zur Änderung der Heizleistung H ausgewertet werden. Schließlich kann die Leistungsreguliervorrichtung 12 die an das Schaltelement 17 geleitete Menge an Heizleistung H verringern, wenn ein vorbestimmtes Zeitintervall verstrichen ist. Dazu kann die Steuereinheit 7 einen Zeitmesser umfassen oder Signale eines Zeitintervallgebers empfangend ausgestaltet sein.

Das Schaltelement 17 kann die Schaltstellung des Schaltkontaktes 27 ändern, wenn entsprechende Signale an den Signaleingängen 18, 19 anliegen. Beispielsweise können an den Signaleingängen 18, 19 Sensorsignale anliegen, welche die Temperatur des aufzuschmelzenden Fluids in einem bestimmten und einem der Heizelemente 2 - 6 zugeordneten Teilvolumen oder auch Aufschmelzvolumen des Gesamtvolumens an aufzuschmelzendem Fluid oder die Temperatur des betriebenen Heizelements 2 - 6 repräsentieren. Schließlich kann das Schaltelement 17 die Schaltstellung des beispielsweise mechanischen Schaltkontaktes 27 wechseln, wenn ein vorgegebenes Zeitintervall abgelaufen ist. Das Schaltelement 17 kann beispielsweise als ein Relais oder auch als ein Halbleiterschalter ausgebildet sein.

Je nach Einstellung der Leistungsreguliervorrichtung 12 und des Schaltelementes 17 wird also nur eines der Heizelemente 2 - 6 mit Heizleistung H versorgt, wobei die Heizleistung H dabei kleiner oder gleich als die maximal zur Verfügung stehende Versorgungsleistung V ist. Im hier gezeigten Ausführungsbeispiel wird zunächst das Heizelement 5 mit Heizleistung H versorgt. Danach wird das Heizelement 6 und im Folgendes das Heizelement 2 betrieben. Schließlich werden die Heizelemente 3, 4 mit Heizleistung H versorgt. Das hohlzylindrisch ausgebildete Heizelement 2 kann eine Entnahmeleitung des Flüssigkeitstanks beheizen und womöglich nach Inbetriebnahme der Heizvorrichtung 1 zuerst mit Heizleistung H versorgt werden, wobei die Heizleistung H der im Betrieb maximal durch das Heizelementes 2 aufnehmbaren elektrischen Leistung oder auch der maximal aus der Versorgungsleistungsquelle 8 entnehmbaren Versorgungsleistung V entsprechen kann. Hierdurch wird zunächst die Entnahmeleitung des Flüssigkeitstanks beheizt und das in ihr angeordnete gefrorene Fluid aufgeschmolzen.

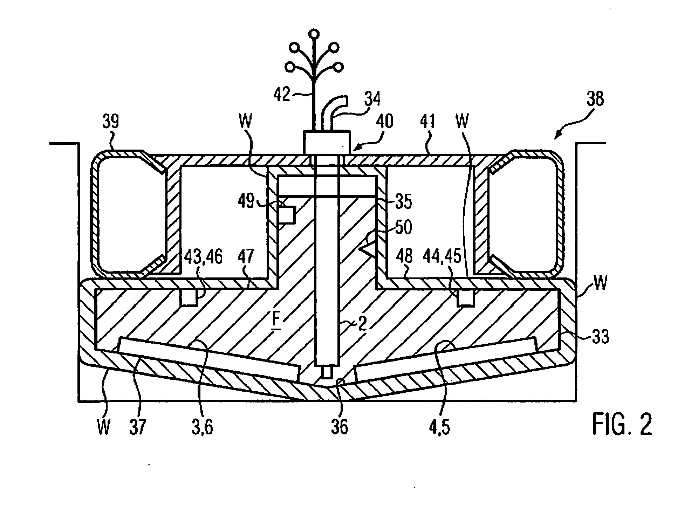

Fig. 2 zeigt ein weiteres Ausführungsbeispiel, wobei für Elemente, die in Funktion und Aufbau den Elementen des Ausführungsbeispiels der Fig. 1 entsprechen, dieselben Bezugszeichen verwendet werden. Der Kürze halber wird lediglich auf die Unterschiede zum Ausführungsbeispiel der Fig. 1 eingegangen.

Die Heizelemente 2 - 6 sind in einem Flüssigkeitstank 33 angeordnet gezeigt. Der Flüssigkeitstank 33 umschließt mit seinen Wandungen W das Tankvolumen. Durch das Heizelement 2 ist die Entnahmeleitung 34 geführt, welche durch einen oberen Abschnitt einer zylindrischen Ausbuchtung 35 des Tanks 33 geführt ist und bis zu einer Tiefstelle 36 des Flüssigkeitstanks 33 ragt. Das Heizelement 2 umschließt die Entnahmeleitung 34 innerhalb des Tanks 33 fast vollständig und die Entnahmeleitung 34 ragt nur an den oberen und unteren Enden des Heizelementes 2 aus diesem heraus. Dabei kann das Heizelement 2 zusammen mit der Entnahmeleitung 34 auch aus der zylindrischen Ausbuchtung 35 nach oben herausragen. Der Flüssigkeitstank 33 ist als ein sogenannten "Sombrero"-Tank ausgeführt, dessen Durchmesser sich am unteren Ende der zylindrischen Ausbuchtung 35 sprunghaft erweitert. Der den Boden 37 ausformende Teil der Wandung W des Flüssigkeitstanks 33 verjüngt sich konisch bis zur vom Flüssigkeitstank 33 weg weisenden Tiefstelle 36.

Der Flüssigkeitstank 33 ist in einer Reserveradmulde 38 angeordnet und gegen Verschieben oder Verkippen gesichert. Auf der zylindrischen Ausbuchtung 35 ruht ein Reserverad 39 für das Kraftfahrzeug. Durch die zentrale Nabe 40 der Felge 41 des Reserverades 39 ragt die Entnahmeleitung 34 sowie ein Kabelbaum 42 mit Anschlussleitungen, über welche die Heizelemente 2 - 6 mit der Steuereinheit 7 verbindbar sind. Alternativ kann sowohl die Entnahmeleitung 34 als auch der Kabelbaum 42 so aus dem Flüssigkeitstank 33 herausgeführt sein, dass diese nicht durch die Felge 41 geführt sind.

Die Heizelemente 3 - 6 sind von innen auf dem Boden 37 des Flüssigkeitstanks 33 angeordnet und an diesem befestigt. Beispielsweise können die Heizelemente 3 - 6 mit dem Boden 37 verklebt oder mechanisch verklemmt an diesen befestigt sein. Alternativ können die Heizelemente 3 - 6 auch innerhalb der Wandung W des Bodens 37 oder außen auf dem Boden 37 angeordnet sein. Alternativ können die Heizelemente 3 - 6 auch in seitlichen oder oberen, vom Boden 37 weg weisenden Abschnitten der Wandung W eingebettet bzw. außen oder innen an diesen anliegen oder auch beabstandet und insbesondere parallel zu den Wandungen W verlaufend angeordnet sein.

Um zu vermeiden, dass die durch die Heizelemente 3 - 6 abgegebene Wärme zu großen Teilen zum Beispiel über den Boden 37 aus dem Tank 33 herausfließt, kann der Flüssigkeitstank 33 wenigstens im Bereich des Bodens 37 nach außen thermisch isoliert sein. Alternativ können die Heizelemente 3 - 6 auch beabstandet vom Boden 37 im Flüssigkeitstank 33 angeordnet sein.

Die Heizelemente 3 - 6 sind hier parallel zum Boden 37 angeordnet und kleiden diesen im Wesentlichen bis auf einen inneren und einen äußeren Bereich aus. In den zwischen den kreisförmig angeordneten Heizelementen 3 - 6 liegenden zentralen Bereich ragt die Entnahmeleitung 34 mit dem Heizelement 2.

Oberhalb der Heizelemente 3 - 6 sind vier Temperatursensoren 43 - 46 angeordnet, mit denen die Temperatur des Fluids F bestimmbar ist. Die Temperatursensoren 43 - 46 sind über hier nicht gezeigt Leitungen mit der Steuereinheit 7 verbindbar, wobei diese Leitungen Teil des Kabelbaums 42 sein können. Die Temperatursensoren 43 - 46 sind an den Heizelementen 3 - 6 gegenüberliegenden Wandungen 47 und 48 befestigt gezeigt und so angeordnet, dass sie die Temperatur des Fluids F in einem oberhalb der Heizelemente 3 - 6 liegenden Aufschmelzvolumen bestimmen.

Die heizelemente 3 - 6 und auch das Heizelement 2 sind so im Flüssigkeitstank 33 angeordnet, dass ihnen unterschiedliche Aufschmelzvolumina im Gesamtvolumen des gefrorenen Fluids F zugeordnet sind. Die Temperatursensoren 43 - 46 messen jeweils die Temperatur des Fluids in einem der Aufschmelzvolumina und können auch beabstandet von den Wandungen 47, 48 angeordnet sein. Zur Bestimmung der Temperatur des dem Heizelement 2 zugeordneten Aufschmelzvolumens ist ein weiterer Temperatursensor 49 innen an der zylindrischen Ausbuchtung 35 angeordnet. Alternativ kann der Temperatursensor 49 auch in oder an der Entnahmeleitung 34 oder auch im Bereich der Tiefstelle 36 angeordnet sein.

Anstelle der auf dem Boden 37 liegenden Anordnung der Heizelemente 3 - 6 können diese auch auf dem Boden 37 stehend angeordnet sein, wobei die Heizelemente 3 - 6 insbesondere bei dieser Anordnung auch als womöglich gebogene stabförmige Leiter ausgebildet sein können. Auch eine seitliche Anbringung an den Tankwänden oder von oben auf den Tank ist möglich.

Schließlich weist die Heizvorrichtung 1 eine Pegelmessvorrichtung auf. Die Pegelmessvorrichtung ist mit einem innen an der zylindrischen Ausbuchtung angeordneten Pegelmesssensor 50 dargestellt, mit dem der Füllstand des Flüssigkeitstanks 33 bestimmbar ist. Der Pegelmesssensor 50 kann dabei als ein temperaturabhängiger Widerstand (NTC oder PTC) oder auch als ein Drucksensor ausgestaltet sein. Um nicht nur feststellen zu können, ob der Tank bis mindestens zu einem gewissen Füllstand gefüllt ist, kann die Pegelmessvorrichtung auch mehrere Pegelmesssensoren 50 in Form von Temperatursensoren, die über die Höhe des Tanks an dessen Innenseiten verteilt angeordnet sein können, umfassen. Insbesondere, wenn der Pegelmesssensor 50 als ein Drucksensor ausgestaltet ist, kann er auch im Bereich der Tiefstelle 36 angeordnet sein. Auch eine Anbringung des Pegelmesssensors an der Entnahmeleitung des Flüssigkeitstanks ist möglich.

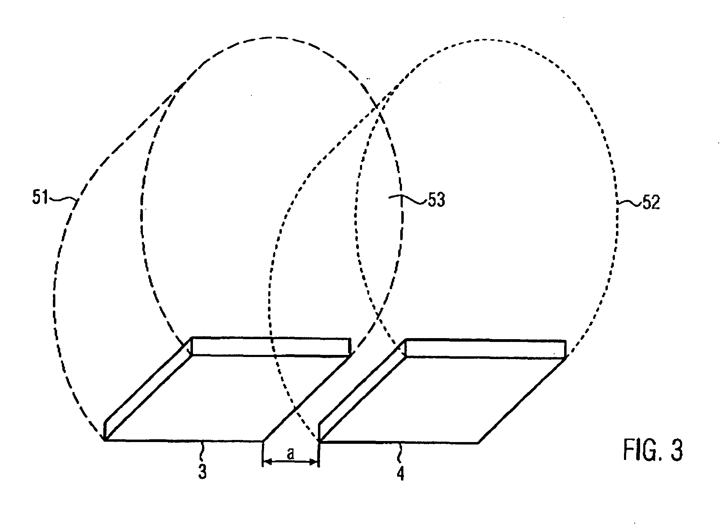

Fig. 3 zeigt ein weiteres Ausführungsbeispiel, wobei für Elemente, die in Funktion und Aufbau den Elementen der Ausführungsbeispiele der Fig. 1 oder 2 entsprechen, dieselben Bezugszeichen verwendet werden. Der Kürze halber wird lediglich auf die Unterschiede zu den Ausführungsbeispielen der Fig. 1 und 2 eingegangen.

Die beiden hier gezeigten Heizelemente 3, 4 sind im Abstand a nebeneinander in einer gemeinsamen Ebene am Boden des Flüssigkeitstanks 33 angeordnet. Auf die Darstellung des Flüssigkeitstanks 33 sowie des im Flüssigkeitstank 33 oberhalb der Heizelemente 3, 4 angeordneten gefrorenen Fluids F ist der Übersichtlichkeit halber verzichtet.

Der Flüssigkeitstank 33 dieses Ausführungsbeispiels weist einen ebenen und horizontal ausgerichteten Boden 37 auf. Oberhalb eines jeden der Heizelemente 3, 4 ist ein Aufschmelzvolumen 51, 52 gezeigt, wobei die Aufschmelzvolumina 51, 52 jeweils dem Teilvolumen des Gesamtvolumens an bei gefrorener Flüssigkeit F einer bestimmten Temperatur entsprechen, das mit einer vorgegebenen Heizleistung H in einem vorgegebenen Zeitintervall aufschmelzbar ist.

Die Aufschmelzvolumina 51, 52 weisen einen Überlappungsbereich 53 auf, der sich im Wesentlichen oberhalb der Lücke zwischen den Heizelementen 3, 4 erstreckt. Aufgrund der von den Heizelementen 3, 4 ausgehenden Wärmestrahlung und insbesondere aufgrund der Wärmeleitung und der Konvektion eines aufgeschmolzenen Anteils des Fluids F sind die Aufschmelzvolumina 51, 52 nicht nur säulenförmige und nach oben ragende Projektion der Heizelemente 2, 4. Vielmehr weisen die Aufschmelzvolumina 51, 52 eine gestreckte Blasenform auf.

## Patentansprüche

1. Verfahren zum Aufschmelzen eines in einem Flüssigkeitstank (33) eines Kraftfahrzeugs angeordneten Volumens eines gefrorenen Fluids (F), bei dem durch das Kraftfahrzeug eine vorgegebene maximal abgreifbare Versorgungsleistung (V) zur Verfügung gestellt wird, welche zumindest teilweise durch eine Heizvorrichtung (1) mit mehreren am oder im Flüssigkeitstank (33) angeordneten Heizelementen (2 - 6) in Wärme gewandelt und diese dem Volumen zugeführt wird, **dadurch gekennzeichnet, dass** zum Aufschmelzen des Volumens nach einem Kaltstart des Kraftfahrzeuges die Heizelemente (2 - 6) einzeln oder in Gruppen nacheinander betrieben werden, wobei die gesamte in Wärme umwandelbare Heizleistung durch das betriebene Heizelement oder die betriebene Gruppe von Heizelementen jeweils in einem beschränkten Bereich konzentriert eingebracht wird.

2. Verfahren nach Anspruch 1, **dadurch gekennzeichnet, dass** das betriebene Heizelement (2 - 6) gewechselt wird, wenn ein vorgegebenes Zeitintervall abgelaufen und/oder ein dem betriebenen Heizelement (2 - 6) zugeordnetes Aufschmelzvolumen (51, 52) des Gesamtvolumens aufgeschmolzen ist.

3. Verfahren nach Anspruch 1 oder 2, **dadurch gekennzeichnet, dass** mit den jeweiligen Heizelementen (2 - 6) unterschiedliche Aufschmelzvolumina (51, 52) des Gesamtvolumens aufgeschmolzen werden.

4. Verfahren nach Anspruch 3, **dadurch gekennzeichnet, dass** nacheinander benachbarte oder voneinander durch ein weiteres Aufschmelzvolumen (51, 52) getrennte Aufschmelzvolumina (51, 52) aufgeschmolzen werden.

5. Verfahren nach einem der Ansprüche 1 bis 4, **dadurch gekennzeichnet, dass** die Heizelemente (2 - 6) mit einer Heizleistung (H) betrieben werden, die kleiner oder gleich der maximalen Leistungsaufnahme des betriebenen Heizelements (2 - 6) ist und die aus der Versorgungsleistung (V) entnommen wird.

6. Verfahren nach Anspruch 5, **dadurch gekennzeichnet, dass** eine Entnahmeleitung (34) des Flüssigkeitstanks (33) durch eines der Heizelemente (2) zu Beginn des Verfahrens mit der maximalen Heizleistung (H) beheizt wird.

7. Verfahren nach Anspruch 5 oder 6, **dadurch gekennzeichnet, dass** die dem betriebenen Heizelement (2 - 6) zugeführte Heizleistung (H) in Abhängigkeit von der Höhe des Gesamtvolumens, einem vorbestimmten Zeitintervall verändert wird.

8. Elektrische Heizvorrichtung (1) zum Aufschmelzen eines in einem Flüssigkeitstank (33) eines Kraftfahrzeugs angeordneten Volumens eines gefrorenen Fluids (F), die mit einer durch das Kraftfahrzeug maximal bereitgestellten Versorgungsleistung (V) betreibbar ist, mit mehreren am oder im Flüssigkeitstank (33) angeordneten Heizelementen (2 - 6), die mit der Versorgungsleistung (V) betreibbar sind, sowie mit einer ein Schaltelement (17) mit mehreren Schaltstellungen umfassenden Steuereinheit (7) zum Betrieb der Heizelemente (2 - 6), wobei die Steuereinheit (7) mehrere unabhängig schaltbare Anschlüsse (22 - 26) aufweist, die mit den Heizelementen (2 - 6) elektrisch leitend verbunden sind, und derart eingerichtet ist, dass zum Aufschmelzen des Volumens nach einem Kaltstart des Kraftfahrzeugs die Heizelemente (2 - 6) einzeln oder in Gruppen betrieben werden, **dadurch gekennzeichnet, dass** in jeder der Schaltstellungen jeweils wenigstens ein anderer der Anschlüsse geschaltet und die Heizleistung an zumindest ein weiteres Heizelement leitbar ist, und dass in jeder der Schaltstellungen jeweils nur eines der Heizelemente oder einer vorgegebene Gruppe von Heizelementen betrieben wird, und dass nach einem Kaltstart des Kraftfahrzeugs die Heizelemente einzeln oder in Gruppen nacheinander betrieben werden, wobei die gesamte in Wärme wandelbare Heizleistung durch das betriebene Heizelement oder die betriebene Gruppe von Heizelementen jeweils in einem beschränkten Bereich konzentriert eingebracht wird.

9. Heizvorrichtung (1) nach Anspruch 8 , **dadurch gekennzeichnet, dass** die Heizelemente (2 - 6) als Flächenheizer ausgebildet sind.

10. Heizvorrichtung (1) nach einem der Ansprüche 8 oder 9, **dadurch gekennzeichnet, dass** die Heizelemente (2 - 6) an einer im Bereich des Tankbodens (37) angeordneten Wandung befestigt sind und ihnen jeweils ein anderes Aufschmelzvolumen (51, 52) zugeordnet ist, das sich vom Heizelement (2 - 6) in das Tankinnere erstreckt.

11. Heizvorrichtung (1) nach einem der Ansprüche 8 bis 10, **dadurch gekennzeichnet, dass** die Heizvorrichtung (1) eine Pegelmessvorrichtung zur Bestimmung des Füllstands des Flüssigkeitstanks (33) umfasst.

12. Heizvorrichtung (1) nach Anspruch 10 oder 11, **dadurch gekennzeichnet, dass** die Heizvorrichtung (1) wenigstens einen Temperatursensor (43 - 46, 49) zur Ermittlung der Temperatur eines Fluids eines Kühlkreislaufs, mit dem Wärme in den Flüssigkeitstank (33) einleitbar ist, oder zur Bestimmung des Aggregatzustands der Flüssigkeit (F) wenigstens eines der Aufschmelzvolumina (51, 52) aufweist.

13. Heizvorrichtung (1) nach einem der Ansprüche 8 bis 12, **dadurch gekennzeichnet, dass** die Steuereinheit (7) eine Leistungsreguliervorrichtung (12) aufweist, der eingangsseitig die Versorgungsleistung (V) zugeführt ist und die ausgangsseitig eine Heizleistung (H) an das Schaltelement (17) leitet.

14. Heizvorrichtung (1) nach einem der Ansprüche 8 bis 13, **dadurch gekennzeichnet, dass** die Heizvorrichtung (1) wenigstens ein Heizelement (2) aufweist, das wärmeübertragend mit einer Entnahmeleitung (34) des Flüssigkeitstanks (33) verbunden ist.

## Claims

1. A method for melting a volume of a frozen fluid (F) located in a fluid tank (33) of a motor vehicle wherein the motor vehicle makes available a predetermined maximum tapped supply power (V) which is converted into heat at least partially by a heating device (1) with a number of heating elements (2-6) arranged on or in the fluid tank (33) and said heat is supplied to the volume, **characterised in that** in order to melt the volume after a cold start of the motor vehicle the heating elements (2-6) are operated consecutively individually or in groups, the whole heat output convertible into heat being introduced respectively in concentrated form by the operated heating element or the operated group of heating elements within a restricted range.

2. The method according to Claim 1, **characterised in that** the operated heating element (2-6) is changed when a predetermined interval of time has expired and/or a melting volume (51, 52) of the whole volume assigned to the operated heating element (2-6) has melted.

3. The method according to Claim 1 or 2, **characterised in that** different melting volumes (51, 52) of the whole volume are melted with the respective heating elements (2-6).

4. The method according to Claim 3, **characterised in that** adjacent melting volumes (51, 52) or melting volumes (51, 52) separated from one another by a further melting volume (51, 52) are melted consecutively.

5. The method according to any of Claims 1 to 4, **characterised in that** the heating elements (2-6) are operated with a heat output (H) that is lower than or equal to the maximum power input of the operated heating element (2-6) and which is extracted from the supply power (V).

6. The method according to Claim 5, **characterised in that** an extraction line (34) of the fluid tank (33) is heated by one of the heating elements (2) at the start of the method with the maximum heat output (H).

7. The method according to Claim 5 or 6, **characterised in that** the heat output (H) delivered to the operated heating element (2-6) is changed depending on the level of the overall volume and a predetermined interval of time.

8. An electric heating device (1) for melting a volume of a frozen fluid (F) located in a fluid tank (33) of a motor vehicle and which can be operated with a maximum supply power (V) provided by the motor vehicle, comprising a number of heating elements (2-6) arranged on or in the fluid tank (33) which can be operated with the supply power (V), and comprising a control unit (7) comprising a switching element (17) with a number of switch positions for operating the heating elements (2-6), the control unit (7) having a number of independently switchable connections (22-26) which are connected to the heating elements (2-6) such as to be electrically conductive, and is set up such that the heating elements (2-6) are operated individually or in groups in order to melt the volume after a cold start of the motor vehicle, **characterised in that** in each of the switch positions respectively at least one other of the connections is switched, and the heat output can be conducted to at least one further heating element, and that in each of the switch positions respectively only one of the heating elements or a predetermined group of heating elements is operated, and that after a cold start of the motor vehicle the heating elements are operated consecutively individually or in groups, the whole heat output convertible into heat being introduced respectively in concentrated form by the operated heating element or the operated group of heating elements within a restricted range.

9. The heating device (1) according to Claim 8, **characterised in that** the heating elements (2-6) are in the form of panel heaters.

10. The heating device (1) according to Claims 8 or 9, **characterised in that** the heating elements (2-6) are fastened to a wall located in the region of the tank floor (37) and a different melting volume (51, 52) is respectively assigned to them that extends from the heating element (2-6) to within the tank.

11. The heating device (1) according to any of Claims 8 to 10, **characterised in that** the heating device (10) has a level measuring device for determining the filling level of the fluid tank (33).

12. The heating device (1) according to Claim 10 or 11, **characterised in that** the heating device (1) has at least one temperature sensor (43-46, 49) for establishing the temperature of a fluid of a cooling circuit with which heat can be conveyed into the fluid tank (33) or for determining the aggregate state of the fluid (F) of at least one of the melting volumes (51, 52).

13. The heating device (1) according to any of Claims 8 to 12, **characterised in that** the control unit (7) has a power regulating device (12) that is introduced to the input side of the supply power (V) and which on the output side conveys a heat output (H) to the switching element (17).

14. The heating device (1) according to any of Claims 8 to 13, **characterised in that** the heating device (1) has at least one heating element (2) that is connected to an extraction line (34) of the fluid tank (33) such as to transfer heat.

## Revendications

1. Procédé de fusion d'un volume d'un fluide gelé (F) disposé dans un réservoir de liquide (33) d'un véhicule, dans lequel le véhicule met à disposition une puissance d'alimentation (V) prédéfinie pouvant être prélevée au maximum qui est, au moins partiellement, convertie en chaleur par un dispositif de chauffage (1) avec plusieurs éléments chauffants (2 - 6) disposés sur ou dans le réservoir de liquide (33), et cette chaleur est conduite au volume, **caractérisé en ce que**, pour la fusion du volume après un démarrage à froid du véhicule automobile, les éléments chauffants (2 - 6) sont activés successivement individuellement ou en groupes, la totalité de la puissance de chauffe qui peut être convertie en chaleur par l'élément chauffant activé ou par le groupe activé d'éléments chauffants étant apportée respectivement de façon concentrée dans une zone limitée.

2. Procédé selon la revendication 1, **caractérisé en ce que** l'élément chauffant (2 - 6) activé est changé quand un intervalle de temps prédéfini a expiré et/ou quand un volume de fusion (51, 52) du volume total affecté à l'élément chauffant (2 - 6) activé a fondu.

3. Procédé selon la revendication 1 ou 2, **caractérisé en ce que**, avec les éléments chauffants (2 - 6) respectifs, différents volumes de fusion (51 - 52) du volume total fondent.

4. Procédé selon la revendication 3, **caractérisé en ce que** des volumes de fusion (51 - 52) voisins les uns derrière les autres ou séparés par un autre volume de fusion (51 - 52) fondent.

5. Procédé selon l'une des revendications 1 à 4, **caractérisé en ce que** les éléments chauffants (2 - 6) sont activés avec une puissance de chauffe (H) qui est inférieure ou égale à la puissance absorbée maximale de l'élément chauffant (2 - 6) et qui est prélevée à partir de la puissance d'alimentation (V).

6. Procédé selon la revendication 5, **caractérisé en ce qu'**une conduite de prélèvement (34) du réservoir de liquide (33) est chauffée par un des éléments chauffants (2) au début du procédé avec la puissance de chauffe (H) maximale.

7. Procédé selon la revendication 5 ou 6, **caractérisé en ce que** la puissance de chauffe (H) conduite à l'élément chauffant (2 - 6) activé est modifiée en fonction de la hauteur du volume total, d'un intervalle de temps prédéfini.

8. Dispositif de chauffe électrique (1) pour la fusion d'un volume d'un fluide (F) gelé disposé dans un réservoir de liquide (33) d'un véhicule automobile, qui peut être activé avec une puissance d'alimentation (V) mise à disposition de façon maximale par le véhicule automobile, avec plusieurs éléments chauffants (2 - 6) disposés sur ou dans le réservoir de liquide (33) et qui peuvent être activés avec la puissance d'alimentation (V), ainsi qu'avec une unité de commande (7) comprenant un élément de commutation (17) avec plusieurs positions de commutation pour l'actionnement des éléments chauffants (2 - 6), l'unité de commande (7) présentant plusieurs connexions (22 - 26) pouvant être commutées indépendamment et qui sont raccordées de façon électriquement conductrice aux éléments chauffants (2 - 6), et étant aménagée de sorte que, pour la fusion du volume après un démarrage à froid du véhicule automobile, les éléments chauffants (2 - 6) sont activés individuellement ou en groupes, **caractérisé en ce que**, dans chacune des positions de commutation, respectivement au moins une autre des connexions est commutée, et la puissance de chauffe peut être conduite à au moins un autre élément chauffant, et **en ce que**, dans chacune des positions de commutation, respectivement seulement un des éléments chauffants ou un groupe prédéfini d'éléments chauffants est activé, et **en ce que**, après un démarrage à froid du véhicule automobile, les éléments chauffants sont activés successivement individuellement ou en groupes, la totalité de la puissance de chauffe qui peut être convertie en chaleur par l'élément chauffant activé ou par le groupe activé d'éléments chauffants étant apportée respectivement de façon concentrée dans une zone limitée.

9. Dispositif de chauffage (1) selon la revendication 8, **caractérisé en ce que** les éléments chauffants (2 - 6) sont constitués en tant qu'éléments chauffants de grande surface.

10. Dispositif de chauffage (1) selon l'une des revendications 8 ou 9, **caractérisé en ce que** les éléments chauffants (2 - 6) sont fixés sur une paroi disposée dans la zone du fond de réservoir (37), et **en ce qu'**un autre volume de fusion (51, 52) leur est respectivement affecté qui s'étend depuis l'élément chauffant (2 - 6) jusque dans l'intérieur du réservoir.

11. Dispositif de chauffage (1) selon l'une des revendications 8 à 10, **caractérisé en ce que** le dispositif de chauffage (1) comprend un dispositif de mesure de niveau pour déterminer le niveau du réservoir de liquide (33).

12. Dispositif de chauffage (1) selon la revendication 10 ou 11, **caractérisé en ce que** le dispositif de chauffage (1) présente au moins un capteur de température (43 - 46, 49) pour la détermination de la température d'un fluide d'un circuit de refroidissement, avec lequel de la chaleur peut être introduite dans le réservoir de liquide (33), ou pour la détermination de l'état physique du fluide (F) d'au moins un des volumes de fusion (51, 52).

13. Dispositif de chauffage (1) selon l'une des revendications 8 à 12, **caractérisé en ce que** l'unité de commande (7) présente un dispositif de régulation de puissance (12) auquel est conduite la puissance d'alimentation (V) côté entrée et qui, côté sortie, conduit une puissance de chauffe (H) à l'élément de commutation (17).

14. Dispositif de chauffage (1) selon l'une des revendication 8 à 13, **caractérisé en ce que** le dispositif de chauffage (1) présente au moins un élément chauffant (2) qui est raccordé, en transmettant la chaleur, à une conduite de prélèvement (34) du réservoir de liquide (33).
